# EUROPEAN PATENT APPLICATION

(11) **EP 4 462 581 A1**
(43) Date of publication of application: **13.11.2024**
(21) Application number: 23898371.2
(22) Date of filing: 01.12.2023
(51) Int. Cl.: H01M 50/503, H01M 50/519, H01M 50/591, H01M 50/588

(54) **BATTERY ASSEMBLY**

(30) Priority: 02.12.2022 KR 20220166622; 07.03.2023 KR 20230029853
(71) Applicant: LG Energy Solution, Ltd., Seoul 07335 (KR)
(72) Inventor: KIM, Min Bum, Daejeon 34122 (KR); JEON, Jong Pil, Daejeon 34122 (KR); SHIN, Ju Hwan, Daejeon 34122 (KR)
(74) Representative: Plasseraud IP
(86) International application number: PCT/KR2023/019652
(87) International publication number: WO 2024/117848

(57) **Abstract**

Provided is a battery assembly according to example embodiments. The battery assembly includes a cell stack with first to third pouch type battery cells, and a first bus bar assembly. The first bus bar assembly includes a first bus bar, a second bus bar, and a first integrated circuit including a first sensing bar configured to measure electric potentials of a second negative electrode lead of the second pouch type battery cell and a third positive electrode lead of the third pouch type battery cell. A thickness of the first sensing bar is less than a thickness of the first bus bar.

## Description

### Cross-reference to related application(s)

The present application claims the benefit of priority based on Korean Patent Application No. 10-2022-0166622, filed on December 2, 2022 and Korean Patent Application No. 10-2023-0029853, filed on March 7, 2023, and the entire contents of the Korean patent applications are incorporated herein by reference.

### [Technical Field]

The present invention relates to a battery assembly.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present invention is directed to providing a battery assembly with improved energy density.

### [Technical Solution]

To address the above-described problem, example embodiments of the present invention provide a battery assembly. The battery assembly includes a cell stack with first to third pouch type battery cells, and a first bus bar assembly.

The first pouch type battery cell includes a first positive electrode lead and a first negative electrode lead, the second pouch type battery cell includes a second positive electrode lead and a second negative electrode lead, and the third pouch type battery cell includes a third positive electrode lead and a third negative electrode lead. The first bus bar assembly is coupled to the cell stack.

The first bus bar assembly includes a first bus bar frame, first and second bus bars coupled to the first bus bar frame and configured to output a voltage of the cell stack, and a first integrated circuit coupled to the first bus bar frame and including a first sensing bar configured to measure electric potentials of the second negative electrode lead and the third positive electrode lead.

A thickness of the first sensing bar is less than a thickness of the first bus bar.

A thickness of each of the first and second bus bars may be in a range of 5 to 20 times the thickness of the first sensing bar.

The thickness of the first sensing bar may be in a range of 0.2 mm to 0.4 mm.

The first sensing bar may include the same material as the first and second bus bars.

The first sensing bar may include a material different from a material of the first and second bus bars.

The first sensing bar may be spaced apart from the third positive electrode lead with the second negative electrode lead interposed therebetween.

The first bus bar assembly may further include a first lead cover coupled to the first bus bar frame and covering the first positive electrode lead, the second negative electrode lead, and the third positive electrode lead.

The first lead cover may include an insulating material.

The first bus bar frame may include an integrated circuit receiving part defining a groove.

The first integrated circuit may be inserted into the groove.

The integrated circuit receiving part of the first bus bar frame may protrude further outward than the first lead cover.

The first bus bar frame may include a plurality of jig insertion slots.

The plurality of jig insertion slots may expose the second negative electrode lead and the third positive electrode lead.

The plurality of jig insertion slots may be spaced apart from the integrated circuit receiving part with the first lead cover interposed therebetween.

One of the plurality of jig insertion slots may expose the first sensing bar.

Each of the plurality of jig insertion slots may be spaced apart from the first and second bus bars.

### [Advantageous Effects]

In a battery assembly according to example embodiments of the present invention, a module frame is not included, and a bus bar for measuring electric potentials of a plurality of nodes in the battery assembly is replaced with a sensing bar with a relatively small thickness. Accordingly, the energy density of the battery assembly can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery assembly according to example embodiments.
FIG. 2 is an exploded perspective view of a battery assembly according to example embodiments.
FIG. 3 is a flowchart of a method of providing a battery assembly according to example embodiments.
FIGS. 4 to 8 are diagrams for describing a combination of a first bus bar frame, a first bus bar, a second bus bar, and a first integrated circuit.
FIG. 9 is a perspective view for describing a welding process.
FIG. 10 is a cross-sectional view taken along line 9I-9I' of FIG. 9.
FIGS. 11 to 13 are diagrams for describing a combination of a first bus bar frame and a first lead cover.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

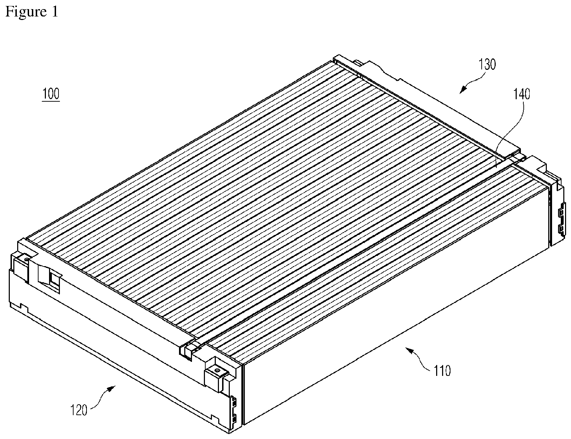

FIG. 1 is a perspective view of a battery assembly according to example embodiments.

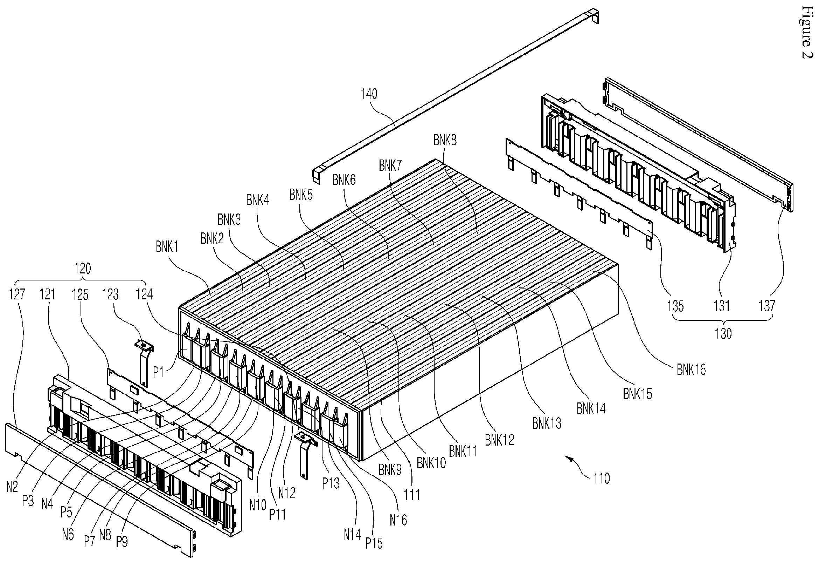

FIG. 2 is an exploded perspective view of the battery assembly according to example embodiments.

Referring to FIGS. 1 and 2, a battery assembly 100 may include a cell stack 110, a first bus bar assembly 120, a second bus bar assembly 130, and a flat flexible cable (FFC) assembly 140.

The cell stack 110 may include first to sixteenth battery banks BKN1, BKN2, BKN3, BKN4, BKN5, BKN6, BKN7, BKN8, BKN9, BKN10, BKN11, BKN12, BKN13, BKN14, BKN15, BKN16 (hereinafter referred to as BKN1 to BKN16). Each of the first to sixteenth battery banks BKN1 to BKN16 may include a plurality of pouch type battery cells (e.g., three pouch type battery cells ) 111. Each of the pouch type battery cells 111 may be a bidirectional cell. That is, a positive electrode lead of each of the pouch type battery cells 111 may be disposed at one end of the pouch type battery cell 111, and a negative electrode lead of each of the pouch type battery cell 111 may be disposed at another end of the pouch type battery cell 111. Hereinafter, an embodiment of the battery assembly 100 including 16 battery banks (i.e., 48 pouch type battery cells 111) will be described, and the number of battery banks may be changed according to the design of the battery assembly 100.

Each of pouch type battery cells 111 of a first battery bank BKN1 may be referred to as a first pouch type battery cell. Each of pouch type battery cells 111 of a second battery bank BKN2 may be referred to as a second pouch type battery cell. Each of pouch type battery cells 111 of a third battery bank BKN3 may be referred to as a third pouch type battery cell. Each of pouch type battery cells 111 of a fourth battery bank BKN4 may be referred to as a fourth pouch type battery cell. Each of pouch type battery cells 111 of a fifth battery bank BKN5 may be referred to as a fifth pouch type battery cell. Each of pouch type battery cells 111 of a sixth battery bank BKN6 may be referred to as a sixth pouch type battery cell. Each of pouch type battery cells 111 of a seventh battery bank BKN7 may be referred to as a seventh pouch type battery cell. Each of pouch type battery cells 111 of an eighth battery bank BKN8 may be referred to as an eighth pouch type battery cell. Each of pouch type battery cells 111 of a ninth battery bank BKN9 may be referred to as a ninth pouch type battery cell. Each of pouch type battery cells 111 of a tenth battery bank BKN10 may be referred to as a tenth pouch type battery cell. Each of pouch type battery cells 111 of an eleventh battery bank BKN11 may be referred to as an eleventh pouch type battery cell. Each of pouch type battery cells 111 of a twelfth battery bank BKN12 may be referred to as a twelfth pouch type battery cell. Each of pouch type battery cells 111 of a thirteenth battery bank BKN13 may be referred to as a thirteenth pouch type battery cell. Each of pouch type battery cells 111 of a fourteenth battery bank BKN14 may be referred to as a fourteenth pouch type battery cell. Each of pouch type battery cells 111 of a fifteenth battery bank BKN15 may be referred to as a fifteenth pouch type battery cell. Each of pouch type battery cells 111 of a sixteenth battery bank BKN16 may be referred to as a sixteenth pouch type battery cell.

Each of the pouch type battery cells 111 of the first battery bank BKN1 may include a first positive electrode lead P1 and a first negative electrode lead (not shown). Each of the pouch type battery cells 111 of the second battery bank BKN2 may include a second positive electrode lead (not shown) and a second negative electrode lead N2. Each of the pouch type battery cells 111 of the third battery bank BKN3 may include a third positive electrode lead P3 and a third negative electrode lead (not shown). Each of the pouch type battery cells 111 of the fourth battery bank BKN4 may include a fourth positive electrode lead (not shown) and a fourth negative electrode lead N4. Each of the pouch type battery cells 111 of the fifth battery bank BKN5 may include a fifth positive electrode lead P5 and a fifth negative electrode lead (not shown). Each of the pouch type battery cells 111 of the sixth battery bank BKN6 may include a sixth positive electrode lead (not shown) and a sixth negative electrode lead N6. Each of the pouch type battery cells 111 of the seventh battery bank BKN7 may include a seventh positive electrode lead P7 and a seventh negative electrode lead (not shown). Each of the pouch type battery cells 111 of the eighth battery bank BKN8 may include an eighth positive electrode lead (not shown) and an eighth negative electrode lead N8. Each of the pouch type battery cells 111 of the ninth battery bank BKN9 may include a ninth positive electrode lead P9 and a ninth negative electrode lead (not shown). Each of the pouch type battery cells 111 of the tenth battery bank BKN10 may include a tenth positive electrode lead (not shown) and a tenth negative electrode lead N10. Each of the pouch type battery cells 111 of the eleventh battery bank BKN11 may include an eleventh positive electrode lead P11 and an eleventh negative electrode lead (not shown). Each of the pouch type battery cells 111 of the twelfth battery bank BKN12 may include a twelfth positive electrode lead (not shown) and a twelfth negative electrode lead N12. Each of the pouch type battery cells 111 of the thirteenth battery bank BKN13 may include a thirteenth positive electrode lead P13 and a thirteenth negative electrode lead (not shown). Each of the pouch type battery cells 111 of the fourteenth battery bank BKN14 may include a fourteenth positive electrode lead (not shown) and a fourteenth negative electrode lead N14. Each of the pouch type battery cells 111 of the fifteenth battery bank BKN15 may include a fifteenth positive electrode lead P15 and a fifteenth negative electrode lead (not shown). Each of the pouch type battery cells 111 of the sixteenth battery bank BKN16 may include a sixteenth positive electrode lead (not shown) and a sixteenth negative electrode lead N16.

Each of the plurality of battery cells 111 is a basic unit of a lithium ion battery, i.e., a secondary battery. Each of the plurality of pouch type battery cells 111 may include a pouch case of aluminum laminate sheet and an electrode assembly included in the pouch case. The electrode assembly included in the pouch case includes a positive electrode, a negative electrode, and a separator interposed between the positive and negative electrodes. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

The pouch type battery cells 111 of the first battery banks BKN1 may be connected to each other in parallel. This is the same for the second to sixteenth battery banks BKN2 to BKN16. The first to sixteenth battery banks BKN1 to BKN16 may be connected to each other in series. Accordingly, the first to sixteenth battery cells may also be connected in series.

More specifically, the first negative electrode leads (not shown) may be connected to the second positive electrode leads (not shown), the second negative electrode leads N2 may be connected to the third positive electrode leads P3, the third negative electrode leads (not shown) may be connected to the fourth positive electrode leads (not shown), the fourth negative electrode leads N4 may be connected to the fifth positive electrode leads P5, the fifth negative electrode leads (not shown) may be connected to the sixth positive electrode leads (not shown), the sixth negative electrode leads N6 may be connected to the seventh positive electrode leads P7, the seventh negative electrode leads (not shown) may be connected to the eighth positive electrode leads (not shown), the eighth negative electrode leads N8 may be connected to the ninth positive electrode leads P9, the ninth negative electrode leads (not shown) may be connected to the tenth positive electrode leads (not shown), the tenth negative electrode leads N10 may be connected to the eleventh positive electrode leads P11, the eleventh negative electrode leads (not shown) may be connected to the twelfth positive electrode leads (not shown), the twelfth negative electrode leads N12 may be connected to the thirteenth positive electrode leads P13, the thirteenth negative electrode leads (not shown) may be connected to the fourteenth positive electrode leads (not shown), the fourteenth negative electrode leads N14 may be connected to the fifteenth positive electrode leads P15, and the fifteenth negative electrode leads (not shown) may be connected to the sixteenth positive electrode leads (not shown). The above-described connections should be understood to mean physical connections, including electrical connections, and to include indirect connections including an additional element therebetween.

The first positive electrode leads P1, the second negative electrode leads N2, the third positive electrode leads P3, the fourth negative electrode leads N4, the fifth positive electrode leads P5, the sixth negative electrode leads N6, the seventh positive electrode leads P7, the eighth negative electrode leads N8, the ninth positive electrode leads P9, the tenth negative electrode leads N10, the eleventh positive electrode leads P11, the twelfth negative electrode leads N12, the thirteenth positive electrode leads P13, the fourteenth positive electrode leads P14, the fifteenth positive electrode leads P15, and the sixteenth negative electrode leads N16 may be covered with the first bus bar assembly 120.

The first negative electrode leads, the second positive electrode leads, the third negative electrode leads, the fourth positive electrode leads, the fifth negative electrode leads, the sixth positive electrode leads, the seventh negative electrode leads, the eighth positive electrode leads, the ninth negative electrode leads, the tenth positive electrode leads, the eleventh negative electrode leads, the twelfth positive electrode leads, the thirteenth negative electrode leads, the fourteenth positive electrode leads, the fifteenth negative electrode leads, and the sixteenth positive electrode leads may be covered with the second bus bar assembly 130.

The first bus bar assembly 120 and the second bus bar assembly 130 may be coupled to the cell stack 110. The first bus bar assembly 120 and the second bus bar assembly 130 may be spaced apart from each other with the cell stack 110 interposed therebetween.

The first bus bar assembly 120 may include a first bus bar frame 121, a first bus bar 123, a second bus bar 124, a first integrated circuit 125, and a first lead cover 127. The first bus bar frame 121 may include an insulating material such as plastic. The first bus bar frame 121 may support and fix the first bus bar 123, the second bus bar 124, the first integrated circuit 125, and the first lead cover 127.

The first bus bar 123 and the second bus bar 124 may be coupled to the first bus bar frame 121. The first bus bar 123 and the second bus bar 124 may be output terminals for outputting a voltage of the cell stack 110. The first bus bar 123 may be a positive terminal, and the second bus bar 124 may be a negative terminal. The first bus bar 123 may be connected to the first positive electrode leads P1. The second bus bar 124 may be connected to the sixteenth negative electrode leads N16. Accordingly, potential difference between the first bus bar 123 and the second bus bar 124 may be substantially the same as the sum of output voltages of each of the first to sixteenth battery banks BKN1 to BKN16.

The first integrated circuit 125 may be coupled to the first bus bar frame 121. The first integrated circuit 125 may be configured to measure voltages of certain nodes of the cell stack 110. The first integrated circuit 125 may be configured to transmit a measured voltage of each of the nodes of the cell stack 110 to a battery management system (BMS).

The nodes include nodes of the first positive electrode leads P1, nodes of the second negative electrode leads N2 and the third positive electrode leads P3, nodes of the fourth negative electrode leads N4 and the fifth positive electrode leads P5, nodes of the sixth negative electrode leads N6 and the seventh positive electrode leads P7, nodes of the eighth negative electrode leads N8 and the ninth positive electrode leads P9, nodes of the tenth negative electrode leads N10 and the eleventh positive electrode leads P11, nodes of the twelfth negative electrode leads N12 and the thirteenth positive electrode leads P13, nodes of the fourteenth negative electrode leads N14 and the fifteenth positive electrode leads P15, and nodes of the sixteenth negative electrode leads N16.

The first lead cover 127 may be coupled to the first bus bar frame 121. The first lead cover 127 may cover the first positive electrode leads P1, the second negative electrode leads N2, the third positive electrode leads P3, the fourth negative electrode leads N4, the fifth positive electrode leads P5, the sixth negative electrode leads N6, the seventh positive electrode leads P7, the eighth negative electrode leads N8, the ninth positive electrode leads P9, the tenth negative electrode leads N10, the eleventh positive electrode leads P11, the twelfth negative electrode leads N12, the thirteenth positive electrode leads P13, the fourteenth positive electrode leads P14, the fifteenth positive electrode leads P15, and the sixteenth negative electrode leads N16 to prevent an unintended short circuit between them and an external element. The first lead cover 127 may include an insulating material.

The second bus bar assembly 130 may include a second bus bar frame 131, a second integrated circuit 135, and a second lead cover 137. The second bus bar frame 131 may include an insulating material such as plastic. The second bus bar frame 131 may support and fix the second integrated circuit 135 and the second lead cover 137.

The second integrated circuit 135 may be coupled to the second bus bar frame 131. The second integrated circuit 135 may be configured to measure voltages of certain nodes of the cell stack 110. A voltage of each of the nodes of the cell stack 110 that is measured by the second integrated circuit 135 may be transmitted to the second integrated circuit 135 by the FFC assembly 140.

The nodes include nodes of the first negative electrode leads and the second positive electrode leads, nodes of the third negative electrode leads and the fourth positive electrode leads, nodes of the fifth negative electrode leads and the sixth positive electrode leads, nodes of the seventh negative electrode leads and the eighth positive electrode leads, nodes of the ninth negative electrode leads and the tenth positive electrode leads, nodes of the eleventh negative electrode leads and the twelfth positive electrode leads, nodes of the thirteenth negative electrode leads and the fourteenth positive electrode leads, and nodes of the fifteenth negative electrode leads and the sixteenth positive electrode leads.

The battery assembly 100 may be mounted in a battery pack, and the battery pack may include a BMS. The BMS may be configured to monitor and balance the battery assembly 100, based on a voltage of each of the nodes of the cell stack 110 measured by the first and second direct circuits 125 and 135. The balancing of the battery assembly 100 is an operation of reducing a deviation between a plurality of battery banks BNK1 to BNK16.

The second lead cover 137 may be coupled to the second bus bar frame 131. The second lead cover 137 may cover the first negative electrode leads, the second positive electrode leads, the third negative electrode leads, the fourth positive electrode leads, the fifth negative electrode leads, the sixth positive electrode leads, the seventh negative electrode leads, the eighth positive electrode leads, the ninth negative electrode leads, the tenth positive electrode leads, the eleventh negative electrode leads, the twelfth positive electrode leads, the thirteenth negative electrode leads, the fourteenth positive electrode leads, the fifteenth negative electrode leads, and the sixteenth positive electrode leads to prevent an unintended short circuit between them and an external element. The first lead cover 127 may include an insulating material.

The first bus bar assembly 120 and the second bus bar assembly 130 may be connected to each other by the FFC assembly 140. The FFC assembly 140 may be disposed on the cell stack 110. The FFC assembly 140 may be a passage for transmitting information about a voltage of each of certain nodes of the cell stack CS sensed by the second bus bar assembly 130.

### (Second Embodiment)

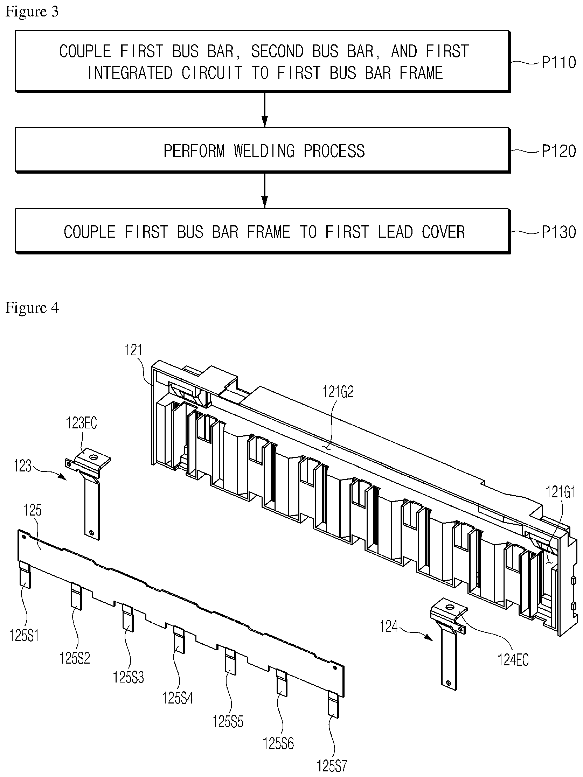

FIG. 3 is a flowchart of a method of providing a battery assembly according to example embodiments.

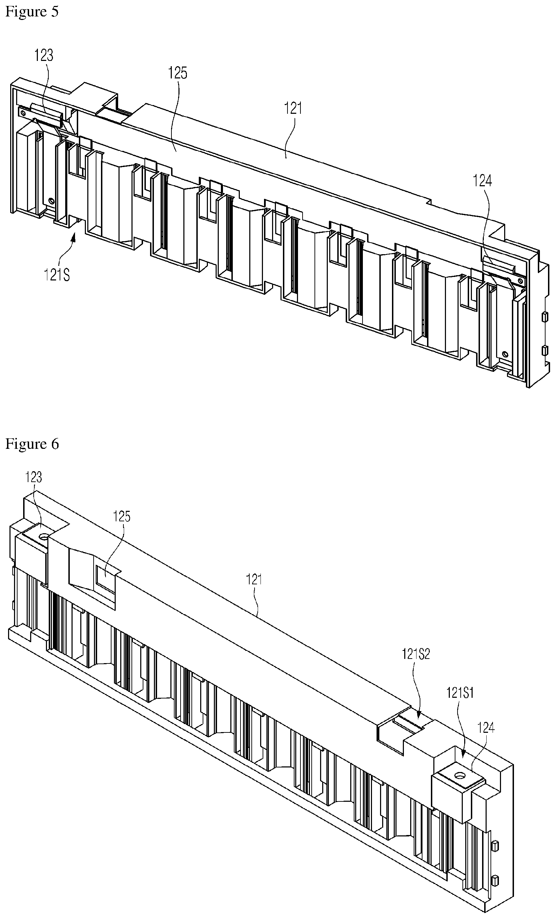

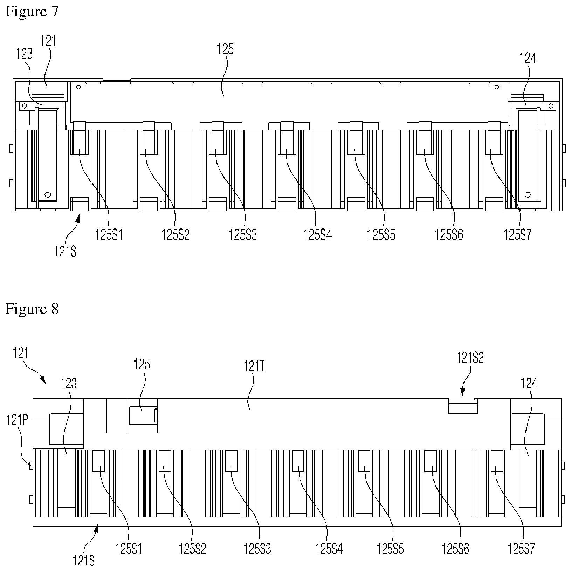

FIGS. 4 to 8 are diagrams for describing a combination of a first bus bar frame 121, a first bus bar 123, a second bus bar 124, and a first integrated circuit 125. More specifically, FIG. 4 is an exploded perspective view of the above-described elements, FIGS. 5 and 6 are perspective views of the above-described elements, FIG. 7 is a rear view of the above-described elements, and FIG. 8 is a front view of the above-described elements.

Referring to FIGS. 3 to 8, in P110, the first bus bar 123, the second bus bar 124, and the first integrated circuit 125 may be coupled to the first bus bar frame 121.

The first bus bar frame 121 may include first grooves 121G1 and a second groove 121G2. The first and second bus bars 123 and 124 may be inserted into the first grooves 121G1. The first integrated circuit 125 may be inserted into the second groove 121G2. The second groove 121G2 may be interposed between the first grooves 121G1. The second groove 121G2 may be defined by an integrated circuit receiving part 121I.

The first bus bar frame 121 may include first slits 121S1 connected to the first grooves 121G1. The first slits 121S1 may expose an external connection part 123EC of the first bus bar 123 or an external connection part 124EC of the second bus bar 124.

The integrated circuit receiving part 121I of the first bus bar frame 121 may include a second slit 121S2. The second slit 121S2 may expose the first integrated circuit 125. The first integrated circuit 125 may be connected to the FFC assembly 140 through the second slit 121S2.

The first bus bar frame 121 may further include a plurality of jig insertion slots 121S used to weld first to seventh sensing bars 125S1, 125S2, 125S3, 125S4, 125S5, 125S6, and 125S7 (hereinafter, 125S1 to 125S7) of the first integrated circuit 125.

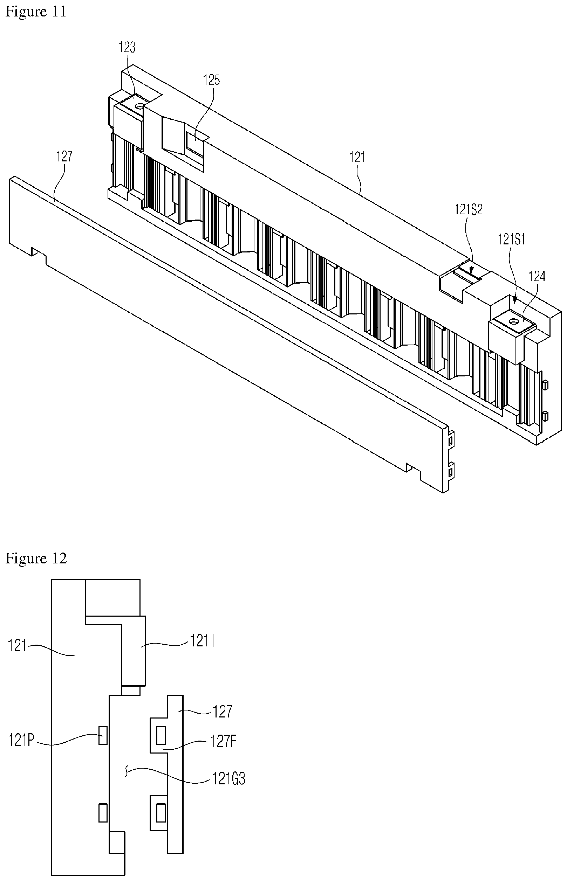

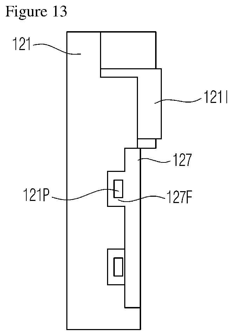

The plurality of jig insertion slots 121S may expose the first to seventh sensing bars 125S1 to 125S7. Each of the plurality of jig insertion slots 121S may be spaced apart from one of the first and second bus bars 123 and 124. Each of the plurality of jig insertion slots 121S may be interposed between the first grooves G1. Each of the plurality of jig insertion slots 121S may be interposed between the first and second bus bars 123 and 124. The plurality of jig insertion slots 121S will be described below with reference to FIGS. 12 and 13.

A thickness of each of the first to seventh sensing bars 125S1 to 125S7 may be different from a thickness of each of the first and second bus bars 123 and 124. The thickness of each of the first to seventh sensing bars 125S1 to 125S7 may be less than the thickness of each of the first and second bus bars 123 and 124. The thickness of each of the first and second bus bars 123 and 124 may be in a range of about 5 to about 20 times the thickness of each of the first to seventh sensing bars 125S1 to 125S7. The thickness of each of the first to seventh sensing bars 125S1 to 125S7 may be in a range of about 0.2 mm to about 0.4 mm.

According to example embodiments, the first to seventh sensing bars 125S1 to 125S7 may include the same material as the first and second bus bars 123 and 124. For example, the first to seventh sensing bars 125S1 to 125S7 and the first and second bus bars 123 and 124 may include one of copper, aluminum, and an alloy thereof.

According to example embodiments, the first to seventh sensing bars 125S1 to 125S7 may include a material different from that of the first and second bus bars 123 and 124. For example, the first to seventh sensing bars 125S1 to 125S7 may include one of copper, aluminum, and an alloy thereof, and the first and second bus bars 123 and 124 may include another of copper, aluminum, and the alloy thereof.

According to example embodiments, bus bars for measuring electric potentials of inner nodes of the cell stack 110 (see FIG. 1) are replaced with the first to seventh sensing bars 125S1 to 125S7 with relatively small thicknesses. Accordingly, the mass of the battery assembly 100 (see FIG. 1) may decrease and mass-energy density may improve.

The second bus bar assembly 130 (see FIG. 2) is substantially the same as the first bus bar assembly 120 except that the first and second bus bars 123 and 124 are not included therein. Accordingly, the above description of the first bus bar assembly 120 with reference to FIGS. 4 to 8 may also apply to the second bus bar assembly 130 (see FIG. 2) except for the first and second bus bars 123 and 124.

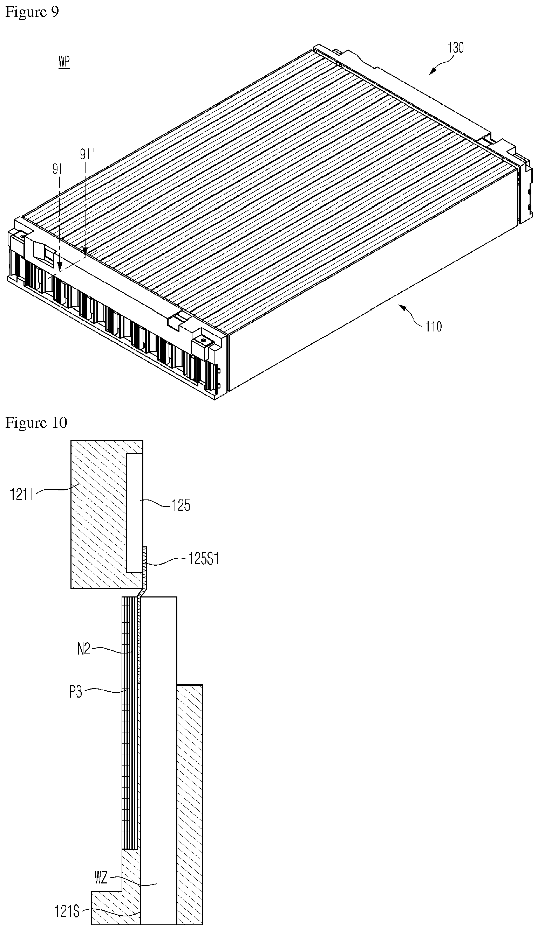

FIG. 9 is a perspective view for describing a welding process. More specifically, a work piece WP shown in FIG. 12 is a combination of the cell stack 110 with the first bus bar frame 121 in which the first bus bar 123, the second bus bar 124, and the first integrated circuit 125 are coupled.

FIG. 10 is a cross-sectional view taken along line 9I-9I' of FIG. 9.

Referring to FIGS. 3, 4, 9, and 10, in P120, a welding process may be performed.

The welding process may include welding of the first bus bar 123 and the first positive electrode leads P1, welding of the first sensing bar 125S1, the second negative electrode leads N2 and the third positive electrode leads P3, welding of the second sensing bar 125S2, the fourth negative electrode leads N4 and the fifth positive electrode leads P5, welding of the third sensing bar 125S3, the sixth negative electrode leads N6 and the seventh positive electrode leads P7, welding of the fourth sensing bar 125S4, the eighth negative electrode leads N8, and the ninth positive electrode leads P9, welding of the fifth sensing bar 125S5, the tenth negative electrode leads N10 and the eleventh positive electrode leads P11, welding of the sixth sensing bar 125S6, the twelfth negative electrode leads N12 and the thirteenth positive electrode leads P13, welding of the seventh sensing bar 125S7, the fourteenth negative electrode leads N14 and the fifteenth positive electrode leads P15, and welding of the second bus bar 124 and the sixteenth negative electrode leads N16. As a non-limiting example, ultrasound waves may be used in the welding process.

During the performance of the welding process, a plurality of welding jigs WZ may be inserted through tje plurality of jig insertion slots 121S of the bus bar frame 121. During the performance of the welding process, the plurality of welding jigs WZ may support the first sensing bar 125S1, the second negative electrode leads N2 and the third positive electrode leads P3, support the second sensing bar 125S2, the fourth negative electrode leads N4 and the fifth positive electrode leads P5, support the third sensing bar 125S3, the sixth negative electrode leads N6 and the seventh positive electrode leads P7, support the fourth sensing bar 125S4, the eighth negative electrode leads N8 and the ninth positive electrode leads P9, support the fifth sensing bar 125S5, the tenth negative electrode leads N10 and the eleventh positive electrode leads P11, support the sixth sensing bar 125S6, the twelfth negative electrode leads N12 and the thirteenth positive electrode leads P13, and support the seventh sensing bar 125S7, the fourteenth negative electrode leads N14 and the fifth positive electrode leads P15.

Because the first and second bus bars 123 and 124 have sufficient rigidity, the welding of the first positive electrode leads P1 and the first bus bar 123 and the welding of the sixteenth negative electrode leads N16 and the second bus bar 124 do not require support by the welding jigs WZ.

According to example embodiments, sensing bars, negative electrode leads, and positive electrode leads may be coupled through a single welding process to reduce the number of process steps required to provide the battery assembly 100 (see FIG. 1), thereby improving productivity of the battery assembly 100 (see FIG. 1).

The welding of the first negative electrode leads, the second positive electrode leads, the third negative electrode leads, the fourth positive electrode leads, the fifth negative electrode leads, the sixth positive electrode leads, the seventh negative electrode leads, the eighth positive electrode leads, the ninth negative electrode leads, the tenth positive electrode leads, the eleventh negative electrode leads, the twelfth positive electrode leads, the thirteenth negative electrode leads, the fourteenth positive electrode leads, the fifteenth negative electrode leads, and the sixteenth positive electrode leads with the second integrated circuit 135 (see FIG. 2) is substantially the same as that performed in P130, and thus, a redundant description thereof is omitted here.

FIGS. 11 to 13 are diagrams for describing a combination of a first bus bar frame 121 and a first lead cover 127. More specifically, FIG. 11 is a perspective view and FIGS. 12 and 13 are side views.

Referring to FIGS. 3, 4 and 11 to 13, in P130, the first lead cover 127 may be coupled to the first bus bar frame 121.

The first bus bar frame 121 may further include a third groove 121G3 and protrusions 121P. The first lead cover 127 may be inserted into the third groove 121G3. The first lead cover 127 may include fixing parts 127F. The fixing parts 127F may include holes into which the protrusions 121P are inserted. By inserting the protrusions 121P into the holes of the fixing parts 127F, the first lead cover 127 and the first bus bar frame 121 may be fixed to each other.

According to example embodiments, an area of the first lead cover 127 may be less than an area the first bus bar frame 121. The integrated circuit receiving part 121I may protrude further outward (i.e., toward an opposite side coupled to the cell stack 110) than the first lead cover 127 inserted into the third groove 121G3. According to embodiments, the first lead cover 127 may cover only portions of the first bus bar frames 121 that overlaps the first to seventh sensing bars 125S1 to 125S7, the first positive electrode leads P1, the second negative electrode leads N2, the third positive electrode leads P3, the fourth negative electrode leads N4, the fifth positive electrode leads P5, the sixth negative electrode leads N6, the seventh positive electrode leads P7, the eighth positive electrode leads N8, the ninth positive electrode leads P9, the tenth negative electrode leads N10, the eleventh positive electrode leads P11, the twelfth negative electrode leads n12, the thirteenth positive electrode leads P13, the fourteenth negative electrode leads N14, the fifteenth positive electrode leads P15, and the sixteenth negative electrode leads N16. According to example embodiments, there is no substantial increase in the volume of the first bus bar assembly (see FIG. 1) due to the insertion of the first lead cover 127, and the volume-energy density of the battery assembly 100 (see FIG. 1) may increase.

The third groove 121G3 may be interposed between the plurality of jig insertion slots 121S (see FIG. 5) and the second groove 121G2 (see FIG. 5). The plurality of jig insertion slots 121S (see FIG. 5) may be spaced apart from the second groove 121G2 (see Fig. 5) with the third groove 121G3 interposed therebetween. Accordingly, the plurality of jig insertion slots 121S (see FIG. 5) may be spaced apart from the integrated circuit receiving part 21I with the first lead cover 127 interposed therebetween.

The above description of the first bus bar assembly 120 with reference to FIGS. 11 to 13 may also apply to the second bus bar assembly 130 (see FIG. 2).

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery assembly comprising:
a cell stack including first to third pouch type battery cells, wherein the first pouch type battery cell includes a first positive electrode lead and a first negative electrode lead, the second pouch type battery cell includes a second positive electrode lead and a second negative electrode lead, and the third pouch type battery cell includes a third positive electrode lead and a third negative electrode lead; and
a first bus bar assembly coupled to the cell stack,
wherein the first bus bar assembly includes:
a first bus bar frame;
first and second bus bars each coupled to the first bus bar frame and each configured to output a voltage of the cell stack; and
a first integrated circuit coupled to the first bus bar frame and including a first sensing bar configured to measure electric potentials of the second negative electrode lead and the third positive electrode lead,
wherein a thickness of the first sensing bar is less than a thickness of the first bus bar.

2. The battery assembly of claim 1, wherein the thickness of the first bus bar and a thickness of the second bus bar are each in a range of 5 to 20 times the thickness of the first sensing bar.

3. The battery assembly of claim 1, wherein the thickness of the first sensing bar is in a range of 0.2 mm to 0.4 mm.

4. The battery assembly of claim 1, wherein the first sensing bar and the first and second bus bars each include a same material.

5. The battery assembly of claim 1, wherein the first sensing bar includes a material different from a material included in each of the first and second bus bars.

6. The battery assembly of claim 1, wherein the first sensing bar is spaced apart from the third positive electrode lead, and the second negative electrode lead is interposed between the first sensing bar and the third positive electrode.

7. The battery assembly of claim 1, wherein the first bus bar assembly further includes a first lead cover coupled to the first bus bar frame and covering the first positive electrode lead, the second negative electrode lead, and the third positive electrode lead, and the first lead cover includes an insulating material.

8. The battery assembly of claim 7, wherein the first bus bar frame includes an integrated circuit receiving part defining a groove, and the first integrated circuit is inserted into the groove.

9. The battery assembly of claim 8, wherein the integrated circuit receiving part of the first bus bar frame protrudes further outward than the first lead cover.

10. The battery assembly of claim 8, wherein the first bus bar frame includes a plurality of jig insertion slots, and the plurality of jig insertion slots expose the second negative electrode lead and the third positive electrode lead.

11. The battery assembly of claim 10, wherein the plurality of jig insertion slots are spaced apart from the integrated circuit receiving part, and the first lead cover is interposed between the plurality of jig insertion slots and the integrated circuit receiving part.

12. The battery assembly of claim 10, wherein one of the plurality of jig insertion slots exposes the first sensing bar.

13. The battery assembly of claim 10, wherein each of the plurality of jig insertion slots is spaced apart from the first and second bus bars.
